Europäisches Patentamt

European Patent Office

Office européen des brevets

(19)

(11) Veröffentlichungsnummer: **0 193 622**
A2

(12) # EUROPÄISCHE PATENTANMELDUNG

(21) Anmeldenummer: 85102214.5

(22) Anmeldetag: 28.02.85

(51) Int. Cl.⁴: **F 01 L 13/00**, F 02 B 41/00,
F 01 L 1/34

(43) Veröffentlichungstag der Anmeldung: 10.09.86
Patentblatt 86/37

(71) Anmelder: **AUDI AG, Postfach 220, D-8070 Ingolstadt
(DE)**

(72) Erfinder: **Piech, Ferdinand, Dr., Gerolfinger Strase 128,
D-8070 Ingolstadt (DE)**
Erfinder: **Zahl, Josef, Zucallistrasse 1, D-8070 Ingolstadt
(DE)**

(84) Benannte Vertragsstaaten: **AT BE CH DE FR GB IT LI LU
NL SE**

(74) Vertreter: **Le Vrang, Klaus, AUDI AG
Postfach 220 Patentabteilung, D-8070 Ingolstadt (DE)**

(54) **Verfahren zur verbesserten Abgasentgiftung einer ventilgesteuerten Brennkraftmaschine.**

(57) Die Erfindung betrifft ein Verfahren zur verbesserten Abgasentgiftung einer ventilgesteuerten Brennkraftmaschine, deren Abgas nach dem Verlassen der Zylinder einem Konverter oder Katalysator zugeführt wird, wobei zu einer wirkungsvolleren Abgasentgiftung der Öffnungsbeginn der Auslaßventile der Brennkraftmaschine nach früh verstellt wird. Bevorzugt wird diese Vorverstellung des Öffnungsbeginns abhängig von der Temperatur des Konverters oder Katalysators gesteuert.

EP 0 193 622 A2

ACTORUM AG

Ingolstadt, den 1. Februar 1984
IP 1892    Za/Fr

0193622

-1-

Verfahren zur verbesserten Abgasentgiftung einer
ventilgesteuerten Brennkraftmaschine.

Die Erfindung betrifft ein Verfahren zur verbesserten Abgasentgiftung einer ventilgesteuerten Brennkraftmaschine gemäß dem Oberbegriff des Patentanspruches 1.

Bei abgasentgifteten Brennkraftmaschinen mit nachgeschaltetem Konverter oder Katalysator ist es außerordentlich wichtig, möglichst schnell die zu einer wirkungsvollen Konvertierung erforderliche Temperatur im Katalysator zu erreichen. Auch in Niedriglast- oder Schubbetriebs-Phasen der Brennkraftmaschine kann diese Temperatur in ungünstigen Fällen unterschritten werden.

Bekannt ist es, zur schnellen Aufheizung des Katalysators das Abgas-Leitungssystem von der Brennkraftmaschine zum Katalysator möglichst kurz und gegebenenfalls wärmeisoliert auszubilden, sowie während der Aufheizphase das Brennstoff-Luftgemisch der Brennkraftmaschine mit einer bestimmten Verzögerung (Spätzündung) zu zünden.

Aufgabe der Erfindung ist es, ein Verfahren aufzuzeigen, mit dem eine schnellere und wirkungsvollere Aufheizung des Katalysators und dementsprechend eine verbesserte Abgasentgiftung erzielbar ist.

Die Lösung dieser Aufgabe ist dem Kennzeichenn des Patentanspruches 1 entnehmbar. Durch die Vorverlegung des

Öffnungsbeginns der Auslaßventile der Brennkraftmaschine wird dem Abgassystem ein energiereicheres, heißeres Abgas zugeführt, welches zu einer schnellen Aufheizung des Katalysators führt. Es wird somit eine sehr frühzeitig einsetzende Konvertierung der Abgase erreicht, aus der eine merkliche Verringerung der schädlichen Abgasemissionen resultiert. Es versteht sich, daß das erfindungsgemäße Verfahren mit zum Stand der Technik gehörenden Maßnahmen wie Spätzündung und wärmeisoliertem Abgassystem kombiniert sein kann.

Besonders vorteilhaft kann der Öffnungsbeginn der Auslaßventile der Brennkraftmaschine gemäß den Merkmalen der Patentansprüche 2 und 3 gesteuert sein, wodurch eine Überhitzung des Katalysators ausgeschlossen wird. Zudem kann ein gleichmäßigeres Temperaturniveau am Katalysator sichergestellt werden, insbesondere wenn bei ungünstiger Witterung eine Vorverstellung des Öffnungsbeginns der Auslaßventile auch im Niedriglastbereich und in Schubphasen der Brennkraftmaschine durchgeführt wird.

Weitere zweckmäßige Merkmale der Erfindung sind in den Patentansprüchen 4 und 5 angeführt, mit denen ein verschlechtertes Startverhalten der Brennkraftmaschine sowie ungünstige Einflüsse auf das Beschleunigungsvermögen der Brennkraftmaschine eliminiert werden.

Ein Ausführungsbeispiel der Erfindung ist im folgenden mit weiteren Einzelheiten näher erläutert. Die Zeichnung zeigt in

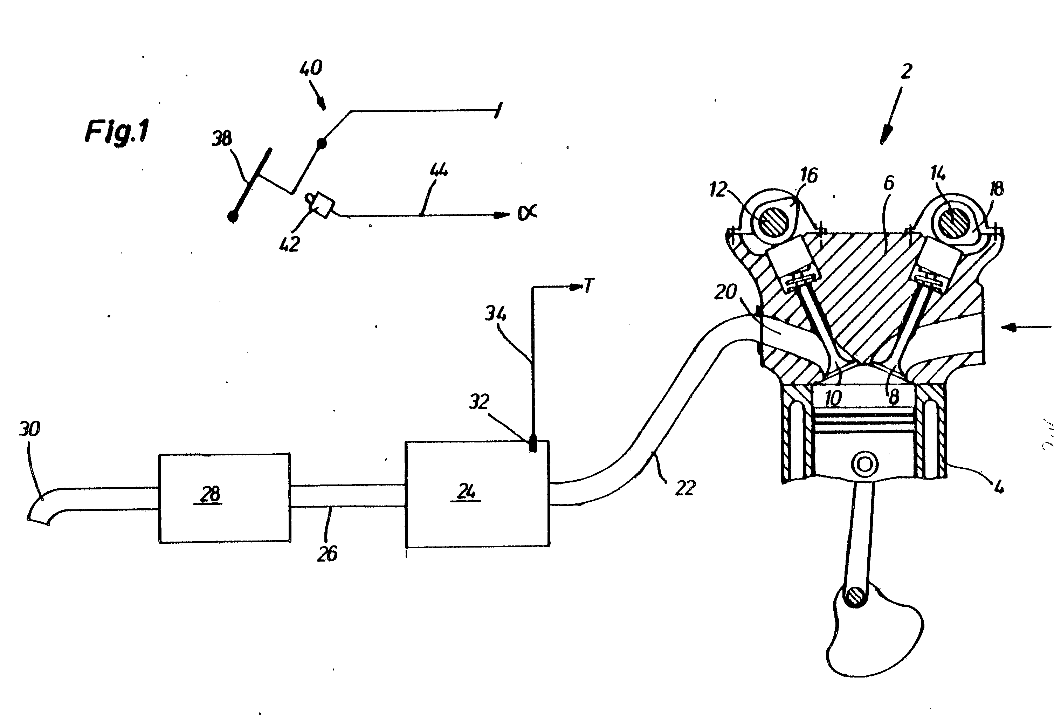

Fig. 1     eine nach dem erfindungsgemäßen Verfahren
           betriebene Brennkraftmaschine im Querschnitt
           und

Fig. 2    eine Ansicht auf die eine Vorverstellung der Auslaßventile bewirkende Verstellvorrichtung.

Eine Hubkolben-Brennkraftmaschine 2 weist einen Zylinderblock 4 und einen Zylinderkopf 6 auf. Im Zylinderkopf 6 sind ein Einlaßventil 8 und ein Auslaßventil 10 für den Gaswechsel angeordnet. Die Ventile 8, 10 werden über einen Nockentrieb mit einer ersten Nockenwelle 12 und einer zweiten Nockenwelle 14 betätigt, wobei die Nockenwelle 12 Auslaßnocken 16 und die Nockenwelle 14 Einlaßnocken 18 trägt.

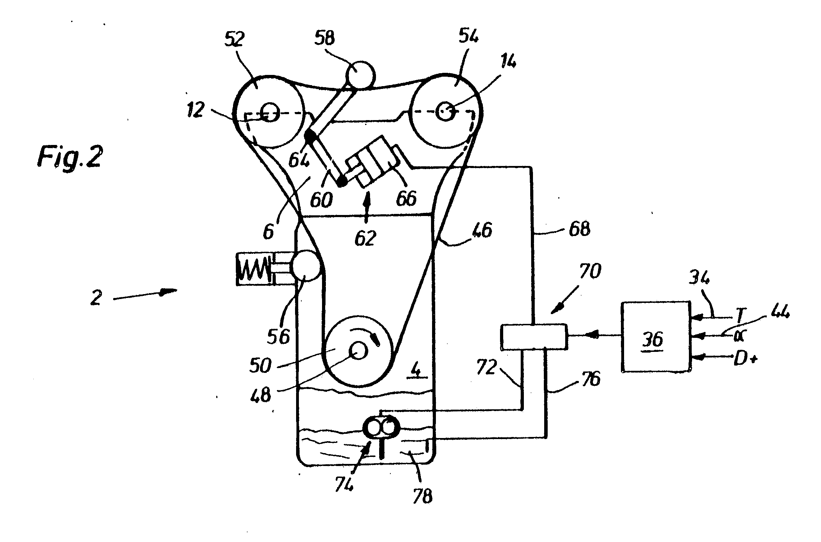

An dem von dem Auslaßventil 10 gesteuerten Abgaskanal 20 im Zylinderkopf 6 ist ein Abgas-Vorrohr 22, ein Katalysator 24, ein daran anschließendes Abgasrohr 26 und ein Schalldämpfer 28 mit einem Endrohr 30 angeschlossen. Der Katalysator 24 ist möglichst nahe an der Brennkraftmaschine 2 angeordnet. Der Katalysator 24 ist mit einem Temperatursensor 32 ausgestattet, welcher über eine elektrische Leitung 34 mit einer Steuerelektronik 36 (vgl. Fig. 2) verbunden ist.

Die Brennkraftmaschine 2, die in ein Kraftfahrzeug eingebaut ist, wird über ein Leistungssteuerglied bzw. ein Gaspedal 38 und ein nicht näher dargestelltes Betätigungsgestänge 40 gesteuert. Im Bereich des Gestänges 40 ist ein Schalter 42 vorgesehen, der in der Vollaststellung des Gaspedales 38 über eine elektrische Leitung 44 ein Signal an die Steuerelektronik 36 abgibt.

Der Antrieb der beiden Nockenwellen 12, 14 wird mittels eines Zahnriemens 46 erzielt, welcher an der Kurbelwelle 48 sowie an den Nockenwellen 12, 14 befestigte Zahnräder 50, 52, 54 überspannt. Die Vorspannung des Zahnriemens 46 bewirkt ein federnd vorgespanntes Spannrad 56.

An dem zwischen den beiden Zahnrädern 52, 54 der Nockenwellen 12, 14 verlaufenden Zahnriemen-Trum greift ein
Verstellrad 58 an, mittels welchem die Länge des betreffenden Zahnriemen-Trums veränderbar ist. Das Verstellrad 58 ist an einem Winkelhebel 60 gelagert, welcher
Winkelhebel verdrehbar am Zylinderkopf 6 gehalten ist.

Am entgegengesetzten Ende des Winkelhebels 60 greift
eine am Zylinderkopf 6 abgestützte Kolben-Zylinder-Einheit 62 an, mittels der der Winkelhebel 60 um seine
ortsfeste Drehachse 64 verschwenkbar ist.

Der volumenveränderliche Arbeitsraum 66 der Kolben-Zylinder-Einheit 62 ist über eine Leitung 68 mit einem Stellventil 70 verbunden.

Das Stellventil 70 schließt in einer Mittelstellung den
Arbeitsraum 66,         während es den Arbeitsraum 66 in
seiner einen Endstellung über eine Leitung 72 mit
einer von der Brennkraftmaschine 2 angetriebenen Verdrängerpumpe 74 und in seiner entgegengesetzten Endstellung über eine Leitung 76 mit einem drucklosen
Reservoir 78 verbindet. Die Verdrängerpumpe 74 kann
die Schmierölpumpe der Brennkraftmaschine sein.

Das Stellventil 70 wird in nicht dargestellter Weise
elektromagnetisch betätigt, wobei die entsprechenden
Steuersignale von der Steuerelektonik 36 ausgehen. Die
Steuerelektronik 36, die eine logische Verknüpfungsschaltung enthält, verarbeitet die von dem Temperatur-

0193622

sensor 32 und dem Schalter 42 empfangenen Signale derart, das bei einer unterhalb einer ersten Temperaturschwelle des Katalysators 24 und bei nicht in Vollaststellung befindlichem Gaspedal 38 ein eine Vorverstellung der Auslaßventile 18 bewirkendes Signal abgegeben wird. Bei Vorliegen dieses Signales verbindet das Stellventil 70 die Leitungen 72 und 68, wodurch über die Kolben-Zylinder-Einheit 62 der Winkelhebel 60 im Uhrzeigersinn verschwenkt wird. Durch die damit verbundene Verlängerung des zwischen den beiden Zahnrädern 52, 54 verlaufenden Zahnriemen-Trums wird eine Vorverstellung der Nockenwelle 12 in Drehrichtung bzw. eine Vorverstellung des Öffnungsbeginns der Auslaßventile 10 erzielt. Dementsprechend wird dem Abgassystems ein in den Brennräumen der Brennkraftmaschine weniger entspanntes, energiereicheres Abgas zugeführt, welches zu einer schnellen Aufheizung des Katalysators 24 führt.

Mit zunehmender Temperatur des Katalysators 24 kann auch die Vorverstellung des Öffnungsbeginns der Auslaßventile 10 durch entsprechende Signale der Steuerelektronik 36 zunehmend zurückgenommen werden. Beim Erreichen einer zweiten, höheren Temperaturschwelle wird die Vorverstellung vollständig aufgehoben. Desgleichen erfolgt eine Aufhebung der Vorverstellung dann, wenn von dem Schalter 42 ein einer Vollaststellung des Gaspedales 38 entsprechendes Signal an die Steuerelektronik 36 abgegeben wird. Über ein drittes der Steuerelektronik 36 zugeführtes Signal D+, welches Signal den Betrieb der Brennkraftmaschine anzeigt, kann sichergestellt werden, daß während des Startens der Brennkraftmaschine keine Vorverstellung des Öffnungsbeginns der Auslaßventile 10 durchgeführt

- 6 -

0193622

wird. Das Signal kann beispielsweise von einem von der Brennkraftmaschine angetriebenen Generator zur Speisung des Bordnetzes des Kraftfahrzeuges abgenommen werden.

Es versteht sich, daß die Erfindung nicht auf das gezeigte Ausführungsbeispiel beschränkt ist. Beispielsweise ist nicht die bei der Verwendung von Katalysatoren mögliche Lambda-Regelung beschrieben. Anstelle eines Katalysators kann auch ein anderes Konvertersystem verwendet sein. Besonders vorteilhaft kann die Vorverstellung des Öffnungsbeginns der Auslaßventile 10 in Brennkraftmaschinen verwirklicht werden, die bereits mit einer variablen Ventilsteuerung mit mechanischer, hydraulischer oder elektrischer Verstellung versehen sind.

Ingolstadt, den 31. Januar 1984
IP 1892    Za/Fr

0193622

P a t e n t a n s p r ü c h e

1. Verfahren zur verbesserten Abgasentgiftung einer ventilgesteuerten Brennkraftmaschine, deren Abgas nach dem Verlassen der Brennräume einem Konverter oder Katalysator zugeführt wird,   d a d u r c h   g e k e n n z e i c h n e t,   daß zum Erhöhen der Abgastemperatur der Öffnungsbeginn der Auslaßventile (10) der Brennkraftmaschine (2) nach früh verstellt wird.

2. Verfahren nach Anspruch 1,   d a d u r c h   g e - k e n n z e i c h n e t,   daß der Öffnungsbeginn der Auslaßventile (10) abhängig von der Temperatur des Konverters oder Katalysators (24) gesteuert ist.

3. Verfahren nach den Ansprüchen 1 und 2,   d a - d u r c h   g e k e n n z e i c h n e t,   daß die Vorverstellung des Öffnungsbeginns der Auslaß- ventile (10) oberhalb einer ersten vorbestimmten Temperaturschwelle mit weiter zunehmender Temperatur zunehmend zurückgenommen wird und daß oberhalb einer zweiten vorbestimmten Temperaturschwelle die Vorver- stellung aufgehoben wird.

C193622

4. Verfahren nach den Ansprüchen 1 bis 3, d a - d u r ch g e k e n n z e i c h n e t, daß die Vorverstellung des Öffnungsbeginns der Aus- laßventile (10) bei Vollast der Brennkraftmaschine aufgehoben wird.

5. Verfahren nach den vorhergehenden Ansprüchen, d a d u r c h g e k e n n z e i c h n e t, daß die Vorverstellung des Öffnungsbeginns der Auslaßventile (10) während des Startens der Brenn- kraftmaschine aufgehoben wird.

0193622

Fig.1

Fig.2